# EUROPÄISCHE PATENTANMELDUNG

(11) **EP 1 365 575 A1**
(43) Veröffentlichungstag der Anmeldung: **26.11.2003**
(21) Anmeldenummer: 02011534.1
(22) Anmeldetag: 23.05.2002
(51) Int. Cl.: H04N 1/407

(54) **Verfahren und Vorrichtung zur Kontrastverbesserung von Bildern**

(71) Anmelder: GRETAG IMAGING Trading AG, 5430 Wettingen (CH)
(72) Erfinder: Zolliker, Peter, 8157 Dielsdorf (CH)
(74) Vertreter: Schwabe - Sandmair - Marx

(57) **Zusammenfassung**

Die vorliegende Erfindung bezieht sich auf ein Verfahren zum Korrigieren mindestens eines Belichtungswertes eines Bildes, wobei ein Belichtungswert eines Bildes unter Verwendung einer Linearisierungsfunktion, welche von den Eigenschaften der Bilderfassungsvorrichtung abhängt, mit welcher die Bilddaten gewonnen wurden, korrigiert wird, sowie auf eine Vorrichtung zum Korrigieren von Belichtungswerten mit einer Dateneingabevorrichtung zum Gewinnen von Bilddaten und einer Recheneinheit, welche ein solches Verfahren durchführen kann.

## Beschreibung

Die vorliegende Erfindung bezieht sich auf ein Verfahren und eine Vorrichtung zur Kontrastverbesserung von Bildern, insbesondere zur Verbesserung des Kontrastes von gescannten unterbelichteten Negativen mit digitalen Photofinishingsystem.

Auf Fotopapier ausbelichtete, unterbelichtete Negative sind bei analoger Bildverarbeitung generell kontrastarm. Bei Verwendung einer digitalen Bildverarbeitung kann prinzipiell der Kontrast verbessert werden. Prinzipiell sind verschiedene Verfahren zur digitalen Kontrastverbesserung bekannt.

Nach einem bekannten Verfahren wird in Abhängigkeit von einem Belichtungsmaß der gesamte Kontrast über ein ganzes Bild erhöht. Jedoch wird bei Anwendung eines solchen Verfahrens der Kontrast von normal- oder überbelichteten Partien im Negativ gleichermaßen erhöht wie die unterbelichteten Partien, was sich bei bestimmten Bildern, wie z.B. unterbelichtete Blitzbilder von Personen, negativ auf die Bildqualität auswirken kann.

Weiterhin ist aus der US 6,233,069 ein Verfahren für digitales Photofinishing bekannt, bei welchem Unterbelichtungs-Korrektur-Algorithmus verwendet wird, wobei die ein digitales Bild zu einer neuen Position für die minimalen Filmdichtewerte verschoben wird, ein LUT (look up table) bei dem verschobenen digitalen Bild verwendet wird, und danach das digitale Bild wieder zu der ursprünglichen Position für die minimalen Filmdichtewerte verschoben wird.

Allgemein ist es nachteilig Algorithmen zu verwenden, welche den verbesserungswürdigen Kontrast eines Einzelbildes unabhängig von den physikalischen und/oder chemischen Gegebenheiten, welche zur Entstehung dieses Kontrastes beigetragen haben, analysieren und basierend auf dem Resultat den Kontrast verbessern. Werden solche Algorithmen verwendet, kann es z.B. vorkommen, dass bei Bildern, welche motivbedingt oder beabsichtigt einen kontrastarmen Bereich aufweisen, fälschlicherweise der Kontrast erhöht wird.

Es ist eine Aufgabe der vorliegenden Erfindung, ein Verfahren und eine Vorrichtung zur Linearisierung oder Korrektur der Belichtungswerte, wie z.B. der Filmdichte, insbesondere bei Negativfilmen, vorzuschlagen, mit welchen eine möglichst detailgetreue Abbildung mit bevorzugt verbessertem Kontrast erhalten werden kann.

Diese Aufgabe wird durch die Gegenstände der unabhängigen Ansprüche gelöst. Vorteilhafte Ausführungsformen ergeben sich aus den Unteransprüchen.

Allgemein liegt die Erfindung auf dem Gebiet der Linearisierung oder Korrektur von Belichtungswerten, wie z.B. Filmdichten, wobei unter dem Begriff "Filmdichte" die logarithmierte Strahlungsdichte oder Lichtintensität z.B. eines von einem Scanner gescannten Negativfilms verstanden werden soll. Jedoch ist es auch möglich, andere Helligkeitsmaße als die Filmdichte zu definieren, z.B. auch ohne Bildung des Logarithmus, so lange diese Filmdichte eine quantitative Aussage bezüglich der Helligkeit oder Lichtstärke ermöglicht.

Zur Vereinfachung wird die Erfindung beispielhaft anhand eines von einem Scanner gescannten Negativfilmes beschrieben, wobei die Erfindung allgemein auch z.B. bei Diapositiven, digitalen Bildaufnahmen oder mit anderen Systemen gewonnenen Bilddaten eingesetzt werden kann, bei welchen durch das Verfahren oder die Vorrichtung zur Erzeugung der Aufnahme spezifische Belichtungsfehler auftreten.

Bei der Belichtung eines Filmes kommt es in Abhängigkeit von der auf den Film auftreffenden Lichtmenge oder Lichtstärke zu einer für diese Lichtmenge spezifischen Änderung, die sich nach der Filmentwicklung z.B. als Schwärzung oder Verfärbung des Filmes bemerkbar macht, wobei bei einer zu geringen Lichtmenge der Film unterbelichtet sein kann, d.h., dass eine äußerst geringe Lichtmenge noch keine Veränderung des Filmes z.B. durch chemische oder physikalische Prozesse hervorruft. Wird die Lichtmenge allmählich erhöht, so verändert sich ab einer gewissen Lichtmenge oder Lichtstärke der Film aufgrund von chemischen und/oder physikalischen Prozessen allmählich und der Grad der Veränderung oder Verfärbung bzw. Schwärzung des Filmes ist um so größer, je mehr Licht auf den Film auftrifft. Dabei ist die Menge der z.B. chemischen Veränderung des Films welche sich später z.B. auf die Schwärzung eines Negativs auswirkt, im gering belichteten oder unterbelichteten Bereich nicht linear zur auf den Film auftreffenden Lichtdichte, so dass die als Belichtungskurve bezeichnete Funktion, welche das Verhältnis zwischen Lichtdichte und Filmveränderung bzw. Verfärbung oder Einschwärzung angibt, im unterbelichteten Bereich nahe der Filmmaske sehr flach verläuft.

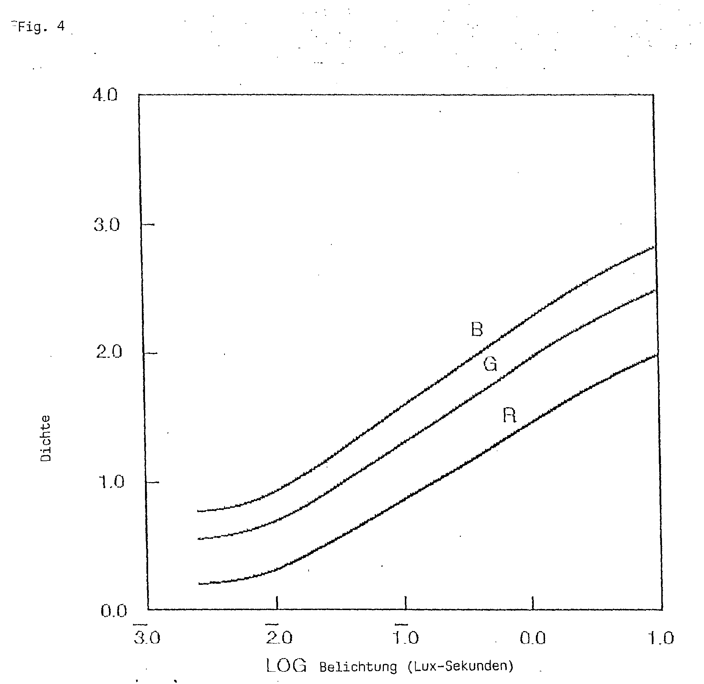

Fig. 4 zeigt beispielhaft eine Belichtungskurve eines Filmes für Rot R, Grün G und Blau B.

Erst bei größeren auf den Film auftreffenden Lichtmengen ist der Grad der Veränderung, beispielsweise Einschwärzung, eines Filmes bevorzugt in etwa linear zur eintreffenden Lichtmenge, so dass in diesem Bereich eine möglichst detailgetreue Wiedergabe erhalten werden kann, wobei z.B. der Grad der Schwärzung eines Filmnegativs in etwa proportional zur eintreffenden Lichtmenge ist. Diese Nicht-Linearität der Belichtungskurve bei Unterbelichtung führt zu unterbelichteten kontrastarmen Bereichen auf Negativfilmen und damit bei den unter Verwendung der Negative erzeugten Bilder bzw. Fotos.

Erfindungsgemäß wird mindestens ein Belichtungswert oder ein Teilbereich eines Bilddatensatzes, wie z.B. eine gemessene Filmdichte eines gescannten Negativfilms, unter Verwendung einer Linearisierungsfunktion, welche von den physikalischen und/oder chemischen Eigenschaften einer Bilderfassungsvorrichtung abhängt, wie z.B. dem verwendeten Film, dem Objektiv oder ähnlichem, korrigiert. Es kann hierzu z.B. eine gemessene oder modellierte Belichtungskurve verwendet werden, mit welcher ein gemessener Belichtungswert in einen korrigierten Belichtungswert umgewandelt wird. Gemäß der Erfindung werden als physikalische und/oder chemische Prozesse, wie z.B. die Anordnung eines Linsensystems, das Transmissionsverhalten von verwendeten Materialien, das Reaktionsverhalten von Chemikalien des Films oder z.B. bei Verwendung von CCDs Kennlinien der einzelnen CCD-Elemente berücksichtigt, welche einen Einfluss auf die Belichtungskurve oder allgemein auf die Umsetzung von einfallendem Licht in Bilddaten haben und zu einem nicht-linearen Verlauf z.B. der Belichtungskurve führen. Diese nicht-lineare Belichtungskurve wird gemäß einer Ausführungsform der Erfindung modelliert, z.B. durch direktes Messen der Belichtungskurve über einen Bereich der Belichtung, welcher von einem nichtbelichteten Bereich über einen unterbelichteten, einen normalbelichteten und einen überbelichteten Bereich verlaufen kann. Die so gemessene Belichtungskurve kann entweder direkt verwendet und z.B. in Nachschlagetabellen gespeichert oder unter Verwendung mathematischer Methoden oder Funktionen modelliert oder approximiert werden, was auch abschnittsweise geschehen kann, um unter Verwendung dieser Belichtungskurve, welche vorgegeben ist durch die chemischen und/oder physikalischen Eigenschaften der bei der Bilderzeugung beteiligten Prozesse, eine Bearbeitung oder Korrektur der Belichtungswerte vorzunehmen. Dadurch soll ein der Realität entsprechendes Bild erhalten werden, wobei durch die Linearisierung der Belichtungskurve, insbesondere im unterbelichteten Bereich, auch eine Kontrastverbesserung von Bildern erhalten werden kann.

Gemäß der Erfindung wird also eine Korrektur z.B. eines unterbelichteten Bereiches kontrastunabhängig und global durchgeführt, d.h. es werden keine Algorithmen verwendet, welche zu begrenzten Bereichen eines Bildes lokale Kontrastverbesserungen erzeugen, was z.B. bei einer von einem Fotografen explizit gewünschten Unterbelichtung zu Bildern führt, die nicht der Vorstellung des Fotografen entsprechen. Erfindungsgemäß wird der Grund der Unterbelichtung bei dem Linearisierungs- oder Korrekturverfahren berücksichtigt, um unterbelichtete oder auch überbelichtete Bereiche zu korrigieren. Unter Verwendung der Erfindung kann z.B. erreicht werden, dass die gleiche Szene, welche mit verschiedenen Belichtungszeiten aufgenommen wurde, nach der erfindungsgemäßen Korrektur und optional weiteren Verarbeitungsschritten den gleichen Kontrast aufweist, was bei den aus dem Stand der Technik bekannten Verfahren nicht oder nur eingeschränkt der Fall ist.

Bevorzugt wird als Belichtungswert die logarithmierte, von einem Scanner gemessene kalibrierte Lichtintensität verwendet, welche auch als Filmdichte bezeichnet wird. Allgemein kann jedoch jedes Verfahren zur Ermittlung einer Größe oder jede Messgröße für Zwecke der Erfindung verwendet werden, mit welcher ein Belichtungswert quantitativ bestimmt werden kann, d.h. ein erfindungsgemäß verwendeter Belichtungswert muss eine quantitative Aussage bezüglich einer Lichtmenge oder Lichtstärke ermöglichen.

Besonders bevorzugt wird eine Umkehrfunktion der Belichtungskurve verwendet, um erfindungsgemäß Belichtungswerte korrigieren oder Linearisieren zu können. Stellt die Belichtungskurve die Abbildung von tatsächlichen Licht- oder Belichtungswerten auf aufgenommene oder auf Filmen aufgezeichnete Belichtungswerte dar, so können mit der Umkehrfunktion dieser Belichtungskurve aus einem vorgegebenen Datenmaterial, wie z.B. einem Filmnegativ, die tatsächlichen Belichtungswerte rekonstruiert werden.

Die Belichtungskurve und/oder ihre Umkehrfunktion kann vorteilhaft durch Kurvenverläufe oder mathematische Funktion approximiert oder geschätzt werden, wobei besonders vorteilhaft verschiedene z.B. durch chemische und/oder physikalische Eigenschaften der Bilderfassungsvorrichtung vorgegebene Abschnitte der jeweiligen Kurvenverläufe durch verschiedene zur Approximation am Besten geeignete Funktionen modelliert werden.

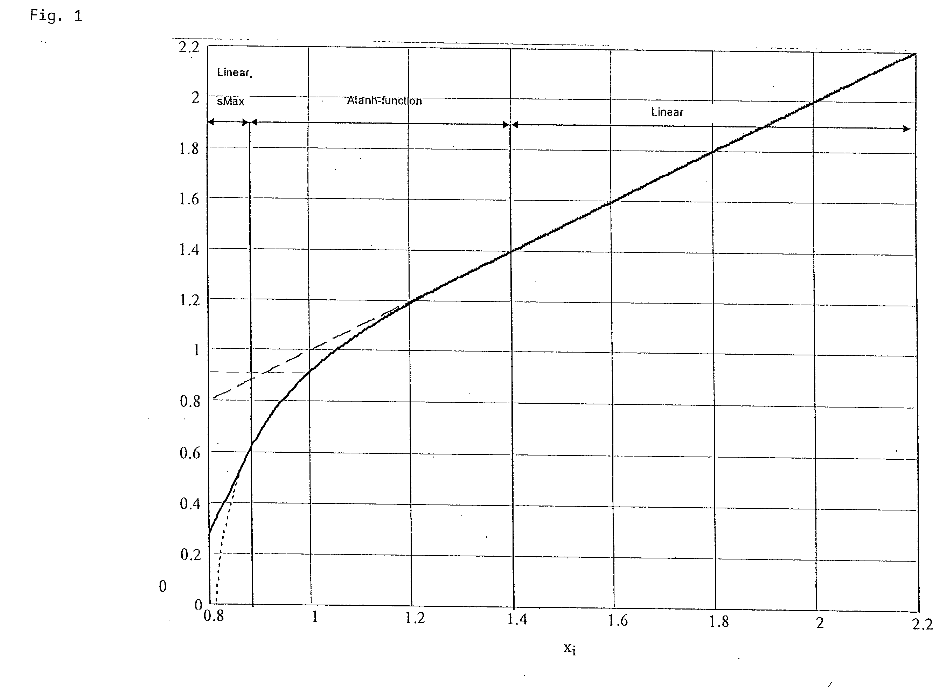

Vorteilhaft wird die Belichtungskurve und/oder ihre Umkehrfunktion in drei Teilbereiche unterteilt, wie beispielhaft in Fig. 1 gezeigt. Dabei verläuft die als durchgehende Linie gezeigte Funktion zur erfindungsgemäßen Linearisierung oder Korrektur von Belichtungswerten im normal belichteten Bereich, in Fig. 1 ab 1,4, linear mit der Steigung 1. Im an den normal belichteten Bereich angrenzenden einfach unterbelichteten Bereich - von etwa 0,9 bis 1,4 in Fig. 1 - wird die Kurve durch eine atanh-Funktion approximiert, welche die Randparameter hat, dass sie bei der Filmmaske 0,8 singulär wird und bei dem an den linearen Bereich angrenzenden Teilabschnitt die gleiche Steigung wie der angrenzende lineare Teil hat. Der stark unterbelichtete Bereich wird durch eine Gerade mit der Steigung sMax modelliert, welche vorteilhaft gleich der Steigung der zur Approximation des einfach unterbelichteten Bereiches verwendeten Funktion an der an den stark unterbelichteten Bereich angrenzenden Stelle ist. Die Verwendung einer Geraden mit vorgegebener Steigung im stark unterbelichteten Bereich ist vorteilhaft, weil Rauschen, Kratzer oder Filmkorn nicht auf ein störendes Maß verstärkt werden sollen. Hierdurch wird jedoch die Anhebung der Belichtungswerte im stark unterbelichteten Bereich limitiert.

Allgemein können auch andere mathematische Funktionen, wie z.B. lineare Funktionen, durch Polynome beschriebene Funktionen, Winkelfunktionen, Exponentalfunktionen, Umkehrfunktionen dieser Funktionen, Kombinationen daraus oder auch Abschnittsweise definierte Funktionen verwendet werden.

Bevorzugt kann der Verlauf der Belichtungskurve und/oder der Kurve bzw. Funktion zur Korrektur oder Linearisierung von Belichtungswerten in einer Nachschlagetabelle (LUT; look up table) abgespeichert werden, so dass unter Verwendung der in der Nachschlagetabelle gespeicherten Werte Belichtungswerte aus über- oder unterbelichteten Bereichen korrigiert werden können. Dabei ist es vorteilhaft, die Nachschlagetabelle mit der Nachlagetabelle, die die Logarithmierung und Kalibrierung der Intensitäten beschreibt, zu kombinieren. Hierdurch kann Rechenzeit gespart werden, da nur eine statt zwei Nachschlagtabellen für diese Verarbeitungsschritte benutzt werden müssen.

Allgemein kann das erfindungsgemäße Verfahren sowohl bei Schwarz/Weiß-Bildern, als auch bei Farbbildern verwendet werden, wobei z.B. drei Korrekturfunktionen für die jeweiligen RGB-Werte vorgesehen sind. Diese Korrekturfunktionen für Rot, Grün und Blau können z.B. in etwa den gleichen Verlauf haben. Es ist jedoch auch möglich, dass verschiedene Korrekturfunktionen für die einzelnen Farbwerte verwendet werden. Ergänzend dazu kann auch noch eine Korrekturfunktion für Schwarz-Werte mit dem gleichen oder einem für Schwarz/Weiß-Bilder spezifischen Verlauf verwendet werden.

Vorteilhaft dient das Verfahren zum Korrigieren oder Bearbeiten der Belichtungswerte von Negativfilmen, welche beispielsweise durch einen Scanner gescannt wurden, Diapositiven oder anders gepeicherten Bilddaten. Ebenso ist es möglich, das erfindungsgemäße Verfahren zum Korrigieren von Belichtungswerten von digital aufgenommenen Bildern zu verwenden, wobei in diesem Fall eine Linearisierungs- oder Korrekturfunktion die für die digitalen Bildaufnahmeelemente, wie z.B. CCD-Elemente, spezifischen Erfassungsfehler korrigieren sollte.

Die Erfindung bezieht sich weiterhin auf ein Programm, das, wenn es auf einem Computer läuft oder in einen Computer geladen wird, den Computer veranlasst, das Verfahren wie oben beschrieben durchzuführen. Weiter bezieht sich die Erfindung auf ein Speichermedium zur Speicherung eins solchen Computerprogramms.

Gemäß einem weiteren Aspekt bezieht sich die vorliegende Erfindung auf eine Vorrichtung zum Linearisieren und/oder Korrigieren von Belichtungswerten mit einer Eingabevorrichtung zum Aufnehmen von bevorzugt digitalen Bilddaten-Signalen und einer Recheneinheit, welche die erfassten Bilddaten-Signale linearisiert oder korrigiert, um Belichtungsfehler auszugleichen, z.B. die Belichtungswerte in unterbelichteten Bereichen anzuheben, und damit den Kontrast zu verbessern.

Bevorzugt ist die Dateneingabevorrichtung ein Scanner, mit welchem z.B. Negativfilme oder Diapositive gescannt werden können und die vorliegenden Bilddaten bevorzugt in digitale Datenwerte umgewandelt werden können.

Ein solcher Scanner kann z.B. gemessene digitalisierte Daten für die Rot-, Grün-, und Blau-Werte einer abgescannten Vorlage an die Recheneinheit ausgeben, in welcher die gescannten Bilddaten-Werte unter Verwendung einer Linearisierungsfunktion und/oder einer oder mehrerer Nachschlagetabellen (LUTs) korrigiert oder bearbeitet werden, um vorzugsweise linearisierte Filmdichten zu erhalten.

Weiterhin bezieht sich die vorliegende Erfindung auf die Verwendung einer Funktion und/oder einer Nachschlagetabelle, welche eine Information bezüglich der für ein bestimmtes Bilderfassungsverfahren und/oder Aufnahmegerät typischen Ungenauigkeiten und/oder Nicht-Linearitäten beinhalten, zum Linearisieren und/oder Korrigieren von Belichtungswerten.

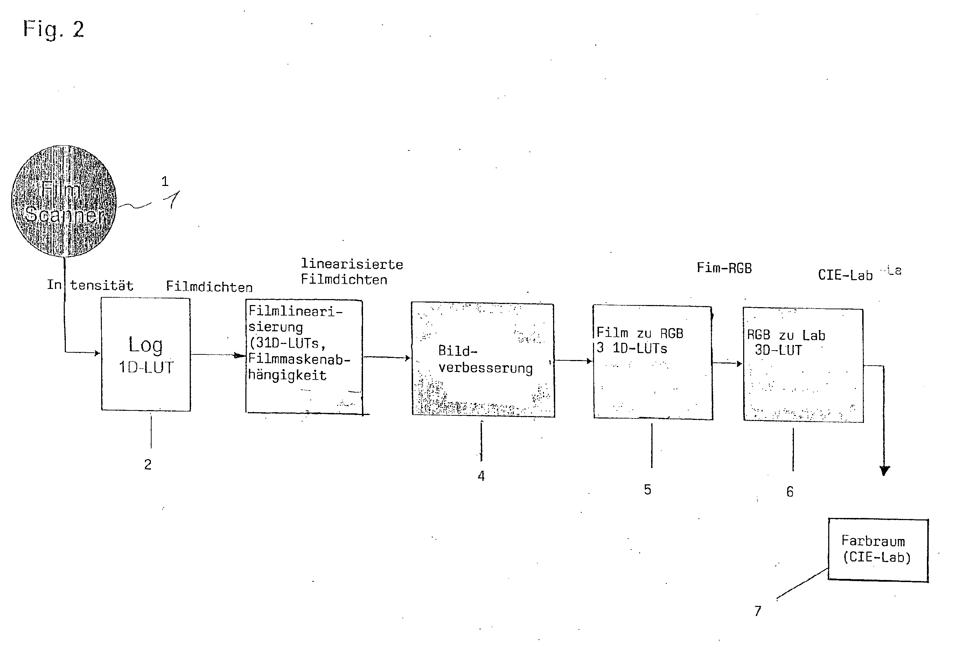

Gemäß einem weiteren Aspekt bezieht sich die Erfindung auf ein System zum Korrigieren oder Linearisieren von Belichtungswerten mit einer oben beschriebenen Vorrichtung und einer Vorrichtung zum Umsetzen der korrigierten Belichtungswerte in Ausgabewerte, welche bevorzugt geräteunabhängig sind und mit welchen Fotos oder Drucke der aufgenommenen Bilder oder Bilddaten erzeugt werden können. Für mögliche Ausgestaltungen einer solchen Umsetzungsvorrichtung wird auf die in Fig. 2 beschriebene Ausführungsform verwiesen, wobei das erfindungsgemäße System eines oder mehrere der in Fig. 2 gezeigten Elemente aufweisen kann.

Nach einem weiteren Aspekt bezieht sich die vorliegende Erfindung auf ein Fotolabor, insbesondere ein Minilab oder Gerät für ein Großlabor mit einer Steuereinrichtung oder einem Computer, die bzw. der das oben beschriebene Verfahren durchführt.

Die Erfindung wird nachfolgend anhand von bevorzugten Ausführungsformen unter Bezugnahme auf die beiliegenden Zeichnungen beschrieben werden. Es zeigen:
- Fig. 1: ein Modell zum Linearisieren von gemessenen Filmdichten gemäß einer Ausführungsform der Erfindung;
- Fig. 2: ein erfindungsgemäßes System zum Linearisieren von Belichtungswerten;
- Fig. 3: Beispiele von nicht-korrigierten und erfindungsgemäß korrigierten Bildern; und.
- Fig. 4: eine beispielhafte Belichtungskurve eines Filmes

Fig. 1 zeigt ein mögliches Beispiel einer Kurve zur Linearisierung von Belichtungswerten. In Fig. 1 ist nach rechts die gemessene Filmdichte aufgetragen, welche z.B. von einem Film-Scanner für Negativfilme erfasst wird. Dabei ist zu berücksichtigen, dass ein unterbelichteter Bereich eines Negativs weniger geschwärzt ist als ein normal belichteter Bereich und entsprechend umgerechnet werden muss, um die über der nach rechts aufgetragenen Achse angegebenen Werte der Filmdichte zu erhalten. In Fig. 1 is ein unterbelichteter Bereich ein Bereich mit niedrigen Werten der Filmdichte. Nach oben ist der Wert der korrigierten oder linearisierten Filmdichte aufgetragen, d.h. der Wert, welcher unter Verwendung der erfindungsgemäßen Linearisierungsfunktion erhalten werden soll, wenn ein gemessener Filmdichtewert vorliegt. Die durchgezogene Linie in Fig. 1 zeigt beispielhaft eine Funktion zum Umsetzen von gemessenen Filmdichtewerten in korrigierte oder linearisierte Filmdichtewerte. Diese Funktion ist in der gezeigten Ausführungsform in drei Teilbereiche unterteilt, wobei jedoch auch Korrekturfunktionen verwendet werden können, die nicht, in zwei Bereiche oder mehr als drei Bereiche unterteilt sind. Es können beispielsweise auch Fehler aufgrund von Überbelichtung durch einen geeigneten Verlauf einer Korrekturfunktion korrigiert werden. Die beispielhaft gezeigten drei Bereiche, in welchen der Verlauf der Korrekturfunktion durch unterschiedliche Teilfunktionen approximiert wird, sind in der gezeigten Ausführungsform ein stark unterbelichteter Bereich, welcher bis zu einem Wert von etwa 0,9 der gemessenen Filmdichte geht. In diesem Bereich wird die Korrekturfunktion durch eine Gerade mit der Steigung sMax approximiert, um Rauschen, Kratzer oder Filmkorn nicht auf ein störendes Maß zu verstärken. Im daran anschließenden einfach unterbelichteten Bereich, welcher in Fig. 1 zwischen den Filmdichtewerten 0,9 und 1,4 liegt, wird die Korrekturfunktion durch eine atanh-Funktion approximiert, deren Steigung beim Wert 0,9 gleich sMax, der Steigung der Gerade für den stark unterbelichteten Bereich ist, und welche bei der Filmmaske singulär wird. Diese atanh-Funktion hat beim Übergang zum linearen Bereich beim Wert 1,4 der gemessenen Filmdichte die Steigung 1 und grenzt an eine Gerade mit der Steigung 1, welche die Korrekturfunktion für den normal belichteten linearen Bereich darstellt. Mit anderen Worten wird im normal belichteten Bereich eine gemessene Filmdichte 1:1 umgesetzt in eine korrigierte Filmdichte, d.h., dass z.B. der Wert 1,6 der gemessenen Filmdichte auf den Wert 1,6 der korrigierten Filmdichte abgebildet wird. Im einfach unterbelichteten Bereich zwischen 0,9 und 1,4 wird z.B. der Wert 1 der gemessenen Filmdichte auf den Wert 0,9 der korrigierten Filmdichte abgebildet, d.h. ein wenig belichteter, beispielsweise geschwärzter Bereich eines Filmnegativs führt zu einer hohen Durchleuchtung und damit hohen Lichtdichte beim Scannen. Um die Unterbelichtung zu korrigieren muss diese hohe Lichtdichte verringert werden. Im stark unterbelichteten Bereich wird die Korrektur unter Verwendung der oben beschriebenen Gerade mit der Steigung sMax durchgeführt, wobei die Fortsetzung der atanh-Funktion gestrichelt gezeigt ist, welche nicht verwendet wird, damit z.B. Kratzer nicht unnötig verstärkt werden.

Die in Fig. 1 sich an den linearen Bereich anschließende unterbrochene Gerade gibt die Funktion an, mit welcher ein idealer Film beaufschlagt werden müsste, um die dann richtige gemessene Filmdichte in den gleichen Wert der bearbeiteten Filmdichte umzusetzen, d.h., bei einem idealen Film wäre eine Korrektur nicht erforderlich.

Fig. 2 zeigt ein Farbverarbeitungssystem mit einem Film-Scanner 1, einer eindimensionalen Nachschlagetabelle 1D-LUT 2, einer erfindungsgemäßen Vorrichtung 3 zum Linearisieren oder Korrigieren von Belichtungswerten, bevorzugt zur Film-Linearisierung, einer Bildverbesserungsvorrichtung 4, einer Vorrichtung 5 zum Umsetzen von Filmdichten in Film-RGB-Werte, einer Vorrichtung 6 zum Umsetzen von RGB-Werten in Laborwerte und einem mit 7 bezeichneten geräteunabhängigen Farbraum.

Die Erfindung ist in der Vorrichtung 3 und vorteilhaft in Kombination mit der Nachschlagetabelle 2 verkörpert, wobei die von einem Film-Scanner 1 gemessenen Intensität der Belichtungswerte von der Nachschlagetabelle 2, welche bereits die Logarithmierung beinhaltet, in Filmdichten umgesetzt und der erfindungsgemäßen Vorrichtung 3 zur Linearisierung oder Korrektur von Belichtungswerten zuführt. In Abhängigkeit von den physikalischen und/oder chemischen Eigenschaften, welche zu einer Ungenauigkeit bei der Aufnahme oder Belichtung führen, können in der Vorrichtung 3 beispielsweise drei Nachschlagetabellen in Abhängigkeit von verschiedenen Filmmasken vorhanden sein. Zum Beispiel hat die Filmdichte am Eingang der Nachschlagtabelle den Wertebereich (0 ... 4,095) und wird in Intervalle von 0,001 Filmdichten eingeteilt, d.h., die Nachschlagetabelle hat 4096 Einträge. Der Ausgang liefert Werte im Bereich (-01,024 ... 4,095). Die Kurven haben typischerweise dieselbe Form für Rot, Grün und Blau, sind jedoch entlang der (x=y)-Richtung so verschoben, dass die unterschiedliche Filmmaskendichte kompensiert wird. Typische Maskendichten sind 0,8 für Blau, 0,6 für Grün und 0,4 für Rot.

Von der erfindungsgemäßen Vorrichtung 3 werden linearisierte Werte der Filmdichte an die Vorrichtung 4 zur Bildverbesserung ausgegeben. Bezüglich der Arbeitsweise der Vorrichtung 4 wird auf die EP 1 100 255 A2 der Anmelderin verwiesen, deren technische Lehre bezüglich der Arbeitsweise der Vorrichtung 4 in diese Anmeldung aufgenommen wird. Die Vorrichtung 4 gibt korrigierte Filmdichten an die Vorrichtungen 5 und 6 aus, zum Umsetzen der korrigierten Filmdichten in Film-RGB-Werte in der Vorrichtung 5 unter Verwendung von drei Nachschlagetabellen und zum weiteren Umsetzen dieser Film-RGB-Werte in CIE-Labor-Werte in der Vorrichtung 6 unter Verwendung von drei Nachschlagetabellen, welche eine Modellierung des verwendeten Papiers verwenden, zur Umsetzung in den mit 7 bezeichneten geräteunabhängigen Farbraum. Bezüglich der Arbeitsweise der Vorrichtungen 5 und 6 wird auf die europäische Patentanmeldung mit der Anmeldenummer 01 101 128.5 der Anmelderin verwiesen, deren technische Lehre bezüglich der Vorrichtungen 5 und 6 in diese Anmeldungen aufgenommen wird.

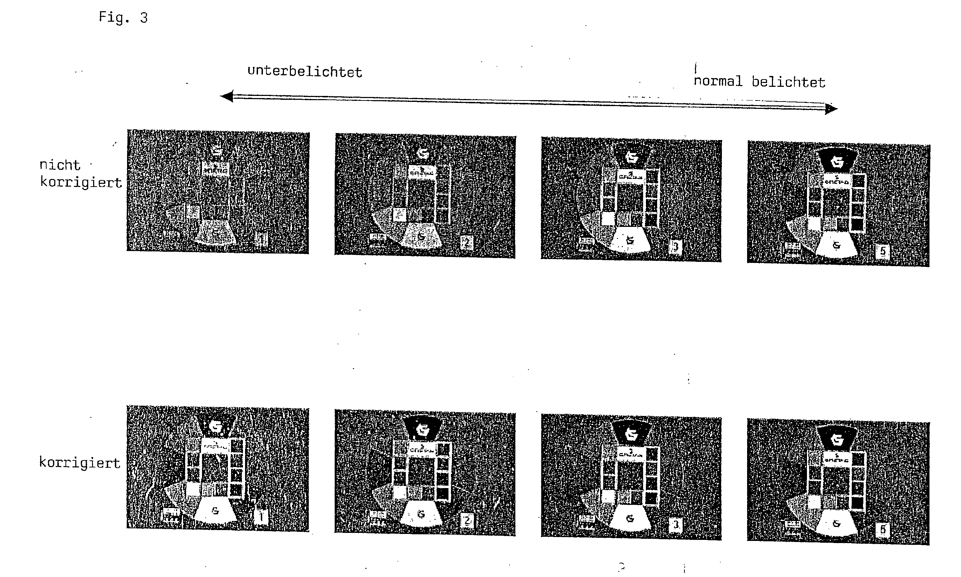

Fig. 3 zeigt in der oberen Hälfte vier Bilder, welche nicht erfindungsgemäß korrigiert wurden, wobei ausgehend vom rechten normal belichteten Bild die links daneben liegenden drei Bilder zunehmend unterbelichtet sind. Unter den jeweiligen Bildern sind erfindungsgemäß korrigierte Bilder gezeigt, welche jeweils in etwa den gleichen Kontrast aufweisen. Lediglich die aus den stärker unterbelichteten Bildern erzeugten korrigierten Bilder weisen aufgrund von Rauschen, Kratzer, oder Filmkorn kleinere Störungen auf.

## Patentansprüche

1. Verfahren zum Korrigieren mindestens eines Teilbereichs eines Bilddatensatzes, wobei Belichtungswerte des Bildes unter Verwendung einer Linearisierungsfunktion, welche von den Eigenschaften der Bilderfassungsvorrichtung abhängt, mit welcher die Bilddaten gewonnen wurden, korrigiert wird.

2. Verfahren nach Anspruch 1, wobei als Belichtungswert eine gemessene Filmdichte verwendet wird.

3. Verfahren nach einem der Ansprüche 1 oder 2, wobei die Linearisierungsfunktion aus einer Umkehrfunktion einer Belichtungskurve gebildet wird.

4. Verfahren nach einem der vorhergehenden Ansprüche, wobei die Linearisierungsfunktion eine Approximationsfunktion der Umkehrfunktion der Belichtungskurve ist.

5. Verfahren nach einem der vorhergehenden Ansprüche, wobei die Linearisierungsfunktion durch verschiedene Teilabschnitte gebildet wird, welche durch verschiedene mathematische Funktionen beschrieben werden.

6. Verfahren nach einem der vorhergehenden Ansprüche, wobei die Linearisierungsfunktion eine lineare Funktion, eine Polynomfunktion, eine Winkelfunktion, eine Exponentialfunktion, eine Umkehrfunktion dieser Funktionen oder eine Kombination daraus ist.

7. Verfahren nach einem der vorhergehenden Ansprüche, wobei eine Nachschlagetabelle (LUT) zur Abspeicherung der Linearisierungsfunktion verwendet wird.

8. Verfahren nach einem der vorhergehenden Ansprüche, wobei Rot-, Grün- und Blau-Werte durch jeweils eine Linearisierungsfunktion korrigiert werden.

9. Verfahren nach einem der vorhergehenden Ansprüche, wobei die Bilddaten aus gescannten Negativfilmen, Diapositiven oder digitalen Bilderfassungsvorrichtungen (CCD) gewonnen werden.

10. Programm, welches, wenn es auf einem Computer läuft oder in einen Computer geladen ist, den Computer veranlasst, das Verfahren nach einem der vorhergehenden Ansprüche durchzuführen.

11. Speichermedium für ein Computerprogramm mit dem Programm nach dem vorhergehenden Anspruch.

12. Verwendung einer von den Eigenschaften einer Bilderfassungsvorrichtung und/oder eines Bilderfassungsverfahrens abhängigen Linearisierungsfunktion zur Korrektur oder Linearisierung von Belichtungswerten.

13. Vorrichtung zum Korrigieren von Belichtungswerten mit einer Dateneingabevorrichtung zum Gewinnen von Bilddaten und einer Recheneinheit, welche ein Verfahren nach einem der Ansprüche 1 bis 9 durchführen kann.

14. Vorrichtung nach Anspruch 13, wobei die Dateneingabevorrichtung ein Scanner, insbesondere zum Scannen von Negativfilmen ist.

15. System zum Umsetzen von Bilddatenwerten in einen geräteunabhängigen Farbraum unter Verwendung einer Vorrichtung nach Anspruch 13 oder 14.

16. Fotolabor, insbesondere Minilab oder Gerät für ein Großlabor mit einer Steuereinrichtung, die das Verfahren nach einem der Ansprüche 1 bis 9 durchführt.
